# EUROPEAN PATENT SPECIFICATION

(11) **EP 3 395 185 B1**
(45) Date of publication and mention of the grant of the patent: **31.05.2023**
(21) Application number: 18168788.0
(22) Date of filing: 23.04.2018
(51) Int. Cl.: A23L 27/30

(54) **SWEETENING COMPOSITIONS**
SÜSSUNGSZUSAMMENSETZUNGEN
COMPOSITION D'ÉDULCORANT

(30) Priority: 27.04.2017 IT 201700045674
(43) Date of publication of application: 31.10.2018
(73) Proprietor: Eridania Italia S.p.A., 40131 Bologna (IT)
(72) Inventor: LAPI, Graziano, 40132 BOLOGNA (IT); PARRA, Giuseppe, 40132 BOLOGNA (IT)
(74) Representative: Studio Torta S.p.A.

(56) References cited:
- US-A1- 2002 187 232
- US-A1- 2009 280 232
- DATABASE GNPD [Online] MINTEL; December 2013 (2013-12), ANONYMUS: "Liquid Sweetener", XP002774510, Database accession no. 2239764
- BROWN R J ET AL: "Non-Nutritive Sweeteners and their Role in the Gastrointestinal Tract", JOURNAL OF CLINICAL ENDOCRINOLOGY AND METABOLISM, THE ENDOCRINE SOCIETY, US, vol. 97, no. 8, 1 August 2012 (2012-08-01) , pages 2597-2605, XP002718547, ISSN: 0021-972X, DOI: 10.1210/JC.2012-1475 [retrieved on 2012-06-07]
- DATABASE GNPD [Online] MINTEL; March 2017 (2017-03), ANONYMUS: "Concentrated Whey Protein", XP002774511, Database accession no. 4714483
- Anonymous: "Tagatose - Wikipedia", , 1 December 2019 (2019-12-01), XP055680298, Retrieved from the Internet: URL:https://en.wikipedia.org/wiki/Tagatose #Physical_characteristics [retrieved on 2020-03-27]

## Description

The present invention relates to a sweetening composition and its use for sweetening foodstuffs.

### Prior art

Worldwide sugar consumption has considerably declined in recent years, especially in the industrialized countries, as a result of the rapid increase in the incidence of nutrition-related degenerative disorders and growing awareness by consumers, especially as regards weight increase and obesity. This has led to increased demand for "sugar-free", "light" and "diet" products and non-caloric "table sweeteners".

Sweetening compositions that use alternative sweeteners must adequately fulfil many objectives such as sweetening power, nutritional characteristics, flavour and storability.

Although various sweetening formulations have been proposed, none of the sweeteners currently on the market has proved to be a fully satisfactory sugar substitute in terms of organoleptic, dietary and rheological properties associated with a significant reduction in caloric value and glycemic index.

The need is therefore felt for new compositions that simultaneously have a flavour similar to sucrose, low caloric value, a low glycemic impact (to improve the possibility of use by diabetics), and absence of potential allergens and toxicity.

Sweeteners are usually classified, according to their sweetening power (by comparison with that of sucrose), as "intense" or "bulk" sweeteners.

"Intense sweeteners" (aspartame, saccharin, acesulfame, cyclamate, etc.) are so called because they are characterised by a much higher sweetening power than sucrose and an almost zero caloric value; they are used at concentrations such that they do not contribute any significant amount of energy to the foods to which they are added. The Acceptable Daily Intake (ADI) established for each intense sweetener indicates the maximum daily dietary intake that does not cause long-term problems.

If sweeteners are used individually, in order to obtain the desired sweet flavour they must be used at higher doses than when they are combined. Using them in combination also allows the synergies that can be created between individual sweeteners to be exploited, to create a composition with a smoother sweet flavour and a greater sweetening power than the nominal value.

"Bulk sweeteners" are substances with a sweetening power similar to or slightly less than that of sucrose. They are so called because they must be used in concentrations that affect the consistency of the food to which they are added, thus making a further energy contribution. The only bulk sweetener that makes no energy contribution is erythritol, which has a caloric value of 0 Kcal/g.

It should be emphasized that although sweetening power is subjectively variable, the sweetening power of known sweeteners is well defined, and well-documented values exist. However, even in the absence of documented values, sweetening power can still be evaluated by test panels by comparison with sweeteners whose sweetening power is known (such as sucrose).

Sweeteners are widely used by consumers, who view them favourably as they do not cause problems of tooth decay, since they have a zero calorie content, and are therefore suitable for the diet of those suffering from disorders associated with excess weight, and they do not raise the glycemic index, and are therefore suitable for diabetics. The higher their ADI, the more favourably intense sweeteners are perceived.

The use of intense sweeteners has a general benefit in terms of low calorie intake and low glycemic impact which makes them particularly suitable when a controlled diet must be introduced and maintained. In particular, in individuals suffering from diabetes, even in a mild or incipient form, it is essential to minimise the intake of substances containing sugars.

It is therefore obviously useful to provide sweetening compositions that sweeten drinks and foods without altering the "smooth" flavour of sucrose, and have the highest possible ADI so as to protect the consumer's health.

US 2009/280232 and US2002187232 disclose sweetening compositions comprising a mixture of high-intensity sweeteners consisting of cyclamate, saccharin and sucralose in the form of an aqueous solution.

The Mintel database (XP002774510, Database accession no. 2239764) reports a liquid sweetener with the trademark "Chuker" which has existed on the South American market since December 2013 and has the following quantitative composition: sodium cyclamate 5.4%; saccharin 2.0% and sucralose 0.05 %. Sucralose is described as "preservative" together with potassium sorbate and sodium benzoate.

### Description of the invention

It has now been found that the combination of cyclamate, saccharin and sucralose provides liquid and solid sweetening formulations which are particularly appreciable, safe and cheap.

The present invention therefore relates to a sweetening composition comprising a mixture of sweeteners consisting of:
- Cyclamate or a salt thereof: 35 to 65%.
- Saccharin or a salt thereof: 10 to 35%
- Sucralose: 2.8 to 55%
wherein the percentages are calculated by weight, as a proportion of the total weight of the high-intensity sweeteners only.

"Edible salt" preferably means the sodium or potassium salt, and more preferably the sodium salt.

The sweetening compositions of the invention may be in liquid form, in particular in the form of an aqueous solution, or solid form.

Liquid compositions contain water amounting to at least 75% by weight of the total weight of the composition, while solid compositions can contain carriers, diluents, excipients and/or bulk sweeteners in percentages of at least 50% by weight of the total of the composition.

The preferred bulk sweeteners are lactose or erythritol, in percentages of at least 50 and 75% by weight respectively of the total weight of the solid formulation.

In any event, the percentages will be selected so that the sum of the percentages of the three ingredients is 100.

The compositions of the invention may contain additives permitted by the applicable legislation for use in liquid or solid table sweeteners or other bulk sweeteners such as erythritol or lactose, or other filling agents.

One aspect of the invention provides an aqueous composition consisting of:
- Cyclamate or an edible salt thereof: 52.5% by weight of the total weight of the intense sweeteners
- Saccharin or an edible salt thereof: 26.5% by weight of the total weight of the intense sweeteners
- Sucralose: 21% by weight of the total weight of the intense sweeteners
- The percentage of water by weight of the total weight of the composition is at least 75%.

Another embodiment is an aqueous composition consisting of:
- Cyclamate or an edible salt thereof: 64.5% by weight of the total weight of the intense sweeteners
- Saccharin or an edible salt thereof: 32.25% by weight of the total weight of the intense sweeteners
- Sucralose: 3.25% by weight of the total weight of the intense sweeteners
- The percentage of water by weight of the total weight of the composition is at least 75%.

Another embodiment is an aqueous composition consisting of:
- Cyclamate or an edible salt thereof: 38.5% by weight of the total weight of the intense sweeteners
- Saccharin or an edible salt thereof: 19.2% by weight of the total weight of the intense sweeteners
- Sucralose: 42.3% by weight of the total weight of the intense sweeteners
- The percentage of water by weight of the total weight of the composition is at least 75%.

Another embodiment is a solid composition consisting of:
- Cyclamate or an edible salt thereof: 52.5% by weight of the total weight of the intense sweeteners
- Saccharin or an edible salt thereof: 26.5% by weight of the total weight of the intense sweeteners
- Sucralose: 21% by weight of the total weight of the intense sweeteners
- The percentage of erythritol by weight of the total weight of the composition is at least 75%.

Another embodiment is a solid composition consisting of:
- Cyclamate or an edible salt thereof: 64.5% by weight of the total weight of the intense sweeteners
- Saccharin or an edible salt thereof: 32.25% by weight of the total weight of the intense sweeteners
- Sucralose: 3.25% by weight of the total weight of the intense sweeteners
- The percentage of erythritol by weight of the total weight of the composition is at least 75%.

Another embodiment is a solid composition consisting of:
- Cyclamate or an edible salt thereof: 38.5% by weight of the total weight of the intense sweeteners
- Saccharin or an edible salt thereof: 19.2% by weight of the total weight of the intense sweeteners
- Sucralose: 42.3% by weight of the total weight of the intense sweeteners
- The percentage of erythritol by weight of the total weight of the composition is at least 75%.

Another embodiment is a solid composition consisting of:
- Cyclamate or an edible salt thereof: 52.5% by weight of the total weight of the intense sweeteners
- Saccharin or an edible salt thereof: 26.5% by weight of the total weight of the intense sweeteners
- Sucralose: 21% by weight of the total weight of the intense sweeteners
- The percentage of lactose by weight of the total weight of the composition is at least 50%.

Another embodiment is a solid composition consisting of:
- Cyclamate or an edible salt thereof: 64.5% by weight of the total weight of the intense sweeteners
- Saccharin or an edible salt thereof: 32.25% by weight of the total weight of the intense sweeteners
- Sucralose: 3.25% by weight of the total weight of the intense sweeteners
- The percentage of lactose by weight of the total weight of the composition is at least 50%.

Another embodiment is a solid composition consisting of:
- Cyclamate or an edible salt thereof: 38.5% by weight of the total weight of the intense sweeteners
- Saccharin or an edible salt thereof: 19.2% by weight of the total weight of the intense sweeteners
- Sucralose: 42.3% by weight of the total weight of the intense sweeteners
- The percentage of lactose by weight of the total weight of the composition is at least 50%.

The compositions of the invention can be advantageously used to sweeten drinks and foods, and possess a sweetening power 10-25% higher than the nominal value due to the synergic effects between the sweeteners selected, together with an organoleptic profile identical to that sucrose, without any detectable extraneous flavour; some of the compositions are advantageous because their Acceptable Daily Intake is at least twice that of the other similar liquid and solid sweeteners present on the market.

The invention will be illustrated in greater detail in the following examples.

### Example 1

Aqueous composition consisting of:
- Sodium cyclamate 5% by weight of the total weight of the composition
- Sodium saccharin 2.5% by weight of the total weight of the composition
- Sucralose 2% by weight of the total weight of the composition
- Acidity correctors and preservatives: q.s.
- Water 90.3% by weight of the total weight of the composition.

### Example 2

Aqueous composition consisting of:
- Sodium cyclamate 10% by weight of the total weight of the composition
- Sodium saccharin 5% by weight of the total weight of the composition
- Sucralose 0.5% by weight of the total weight of the composition
- Acidity correctors and preservatives: q.s.
- Water 84.3% by weight of the total weight of the composition.

### Example 3

Aqueous composition consisting of:
- Sodium cyclamate 2.5% by weight of the total weight of the composition
- Sodium saccharin 1.25% by weight of the total weight of the composition
- Sucralose 2.75% by weight of the total weight of the composition
- Acidity correctors and preservatives: q.s.
- Water 93.3% by weight of the total weight of the composition.

### Example 4

Solid granular composition consisting of:
- Sodium cyclamate 1% by weight of the total weight of the composition
- Sodium saccharin 0.5% by weight of the total weight of the composition
- Sucralose 0.4% by weight of the total weight of the composition
- Erythritol 98.1% by weight of the total weight of the composition.

### Example 5

Solid granular composition consisting of:
- Sodium cyclamate 2% by weight of the total weight of the composition
- Sodium saccharin 1% by weight of the total weight of the composition
- Sucralose 0.1% by weight of the total weight of the composition
- Erythritol 96.9% by weight of the total weight of the composition.

### Example 6

Solid granular composition consisting of:
- Sodium cyclamate 0.5% by weight of the total weight of the composition
- Sodium saccharin 0.25% by weight of the total weight of the composition
- Sucralose 0.55% by weight of the total weight of the composition
- Erythritol 98.7% by weight of the total weight of the composition.

### Example 7

Solid composition in tablet form consisting of:
- Sodium cyclamate 10% by weight of the total weight of the composition
- Sodium saccharin 5% by weight of the total weight of the composition
- Sucralose 4% by weight of the total weight of the composition
- Lubricants and disintegrating agents: q.s.
- Lactose 77.5% of the total weight of the composition.

### Example 8

Solid composition in tablet form consisting of:
- Sodium cyclamate 20% by weight of the total weight of the composition
- Sodium saccharin 10% by weight of the total weight of the composition
- Sucralose 1% by weight of the total weight of the composition
- Lubricants and disintegrating agents: q.s.
- Lactose 65.5% of the total weight of the composition.

### Example 9

Solid composition in tablet form consisting of:
- Sodium cyclamate 5% by weight of the total weight of the composition
- Sodium saccharin 2.5% by weight of the total weight of the composition
- Sucralose 5.5% by weight of the total weight of the composition
- Lubricants and disintegrating agents: q.s.
- Lactose 83.5% of the total weight of the composition.

### Example 10

### Sensory analysis

The following samples were evaluated:
- Granulated sugar 5% W/W in water (comparator)
- Composition described in Example 1 at the concentration of 0.25% W/W in water
- Composition described in Example 1 at the concentration of 0.225% W/W in water
- Composition described in Example 1 at the concentration of 0.20% W/W in water

The samples underwent descriptive analysis (ref. Standard ISO 13299) conducted by a panel of eight judges. The analysis sessions were held in a sensory analysis room furnished in accordance with standard UNI ISO 8589. The level of sweetness, the 4 remaining basic tastes (sourness, bitterness, saltiness and umami) and any extraneous flavors not present in the comparator were evaluated.

The samples were tested according to a randomized balanced trial design and served on a white plastic plate marked with an identifying code. The judges tested the products simultaneously in "blinded" form.

For each attribute evaluated, the evaluation form contained 10 cm unstructured linear scales (indicating the position of the comparator sample) anchored at the ends with terms identifying the extreme intensities for a specific descriptor (0=slight, 10=accentuated for the basic tastes and 0=imperceptible, 10=extremely perceptible for the off-notes).

On the scales, the position of the comparator was taken as central (value=5) for all the basic tastes and value=0 for the off-notes. The judges were asked to indicate on the scale their opinion of the intensity of the samples examined, taking account of the position of the comparator.

During each analysis session the judges evaluated the sample presented as comparator first, followed by the samples marked with a numerical code, including the comparator, which was added as control.

The evaluations provided by the panel of judges, attribute by attribute, underwent Analysis of Variance (P = 95%) and the Least Significant Difference test (LSD P = 95%).

The results of said statistical processing are set out in a table showing, for each attribute:
- the mean values;
- the Fisher F value (ratio of variance);
- the corresponding level of statistical significance (Sig. level);
- the Least Significant Difference test (LSD-test, P = 95%)^{∗};
*^{∗} The latter parameter indicates the minimum difference between two mean values required for them to be considered statistically significant, with a probability equal to or greater than 95%.*

In this way it was possible to establish whether statistically significant differences existed between the samples at the significance level set, and if so, between which samples. The same comparator was included as control.

Two mean values are classed as significantly different (P ≥ 95%) if their difference is greater than or equal to the LSD (Least Significant Difference) value.

In terms of graphics, the results of the LSD test are represented in the table by a symbol (•, ■ or Δ) alongside the mean values; for any given attribute, two samples are classed as statistically distinguishable, and therefore different, with a probability of P≥ 95%, if they have no symbols in common.

### Results of Analysis of Variance and LSD test

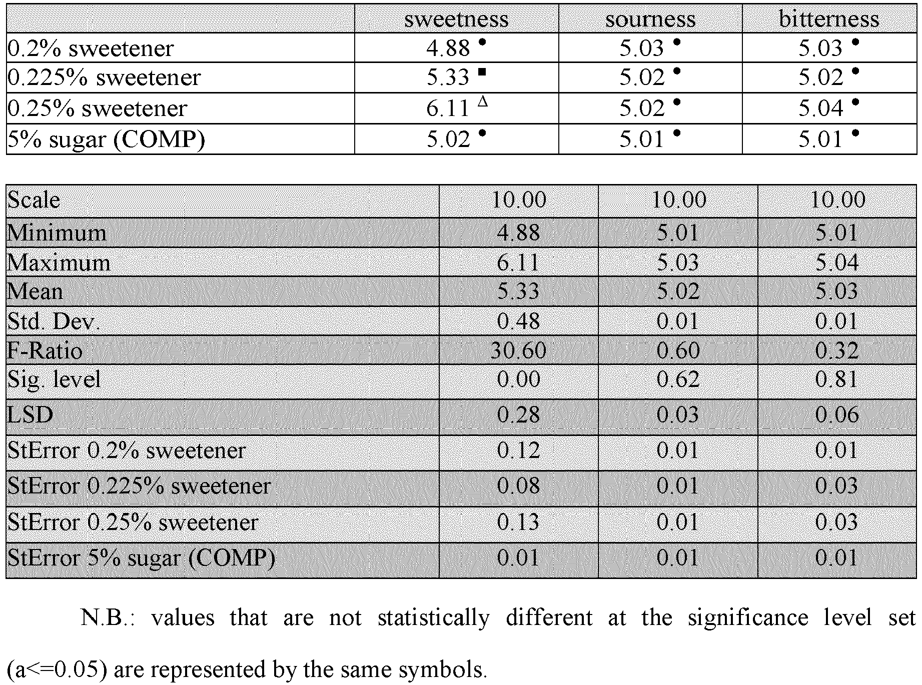

### Results of Analysis of Variance and LSD test

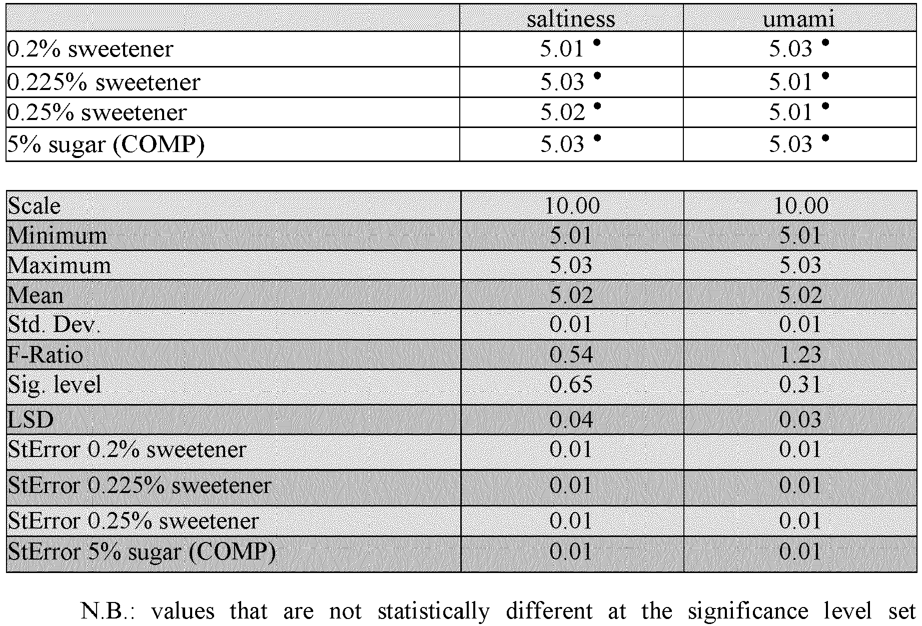

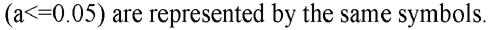

### Results of Analysis of Variance and LSD test

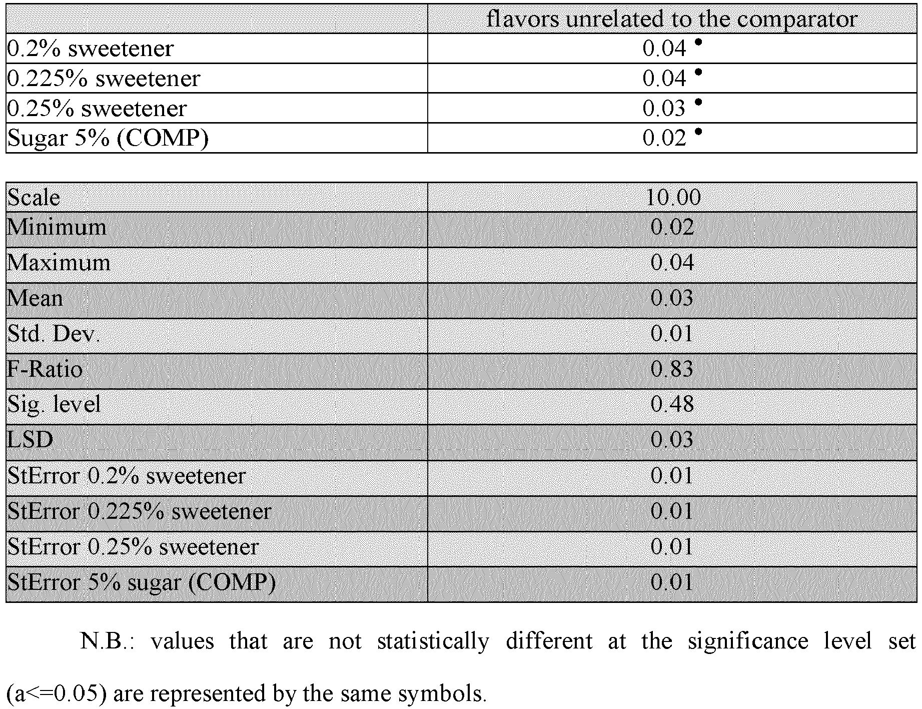

### Sweetness

The 0.225% and 0.25% solutions of the liquid sweetener are statistically different from the comparator; specifically, they are perceived as sweeter than the 5% sugar solution, with a very slight difference for the 0.225% sweetener and a slight difference for the 0.25% sweetener.

The 0.2% solution of the liquid sweetener has the same level of sweetness as the comparator solution (5% granulated sugar in water).

### Sourness

No statistically significant differences emerge between the solution containing 5% granulated sugar and the liquid sweetener solutions at the three different concentrations.

### Bitterness

No statistically significant differences emerge between the solution containing 5% granulated sugar and the liquid sweetener solutions at the three different concentrations.

### Saltiness

No statistically significant differences emerge between the solution containing 5% granulated sugar and the liquid sweetener solutions at the three different concentrations.

### Umami

No statistically significant differences emerge between the solution containing 5% granulated sugar and the liquid sweetener solutions at the three different concentrations.

### Example 11

A sensory test was conducted in a coffee matrix to compare the sweetener of example 1 with the Chuker^{®} sweetener.

The method used for the panel test was the Ranking Test, conducted in accordance with standard UNI EN ISO 8587:2006. The judges were asked to taste the various sweetened samples in a coffee matrix, to rank them in increasing order of intensity of the attributes Aroma, Odor, Sweetness and Persistence, and freely describe the types of odors, aromas, tastes and persistences mainly perceived. The results of the sensory analysis were obtained by totalling the preferences of each judge relating to each of the samples tasted.

*Results of panel test:* the two liquid sweeteners for two of the four attributes evaluated, namely sweetness and aroma, fell into two different groups.

The difference between the two sweeteners for the two attributes was significant; specifically, the sweetener of the invention was considered sweeter (by 90% of tasters) and to have more aroma (by 70% of tasters). For the odor and persistence attributes the two sweeteners belong to the same group (with no significant differences between them).

No particular types of odors, aromas, tastes or persistences were found for the two sweeteners.

## Claims

1. Sweetening composition comprising a mixture of intense sweeteners consisting of:
- Cyclamate or an edible salt thereof in a percentage ranging from 35 to 65%;
- Saccharin or an edible salt thereof in a percentage ranging from 10 to 35%;
- Sucralose in a percentage ranging from 2.8 to 55%.
wherein the percentages are calculated by weight of the total weight of the intensive sweeteners alone.

2. Sweetening composition according to claim 1 in the form of an aqueous solution comprising at least 75% by weight of water.

3. Sweetening composition according to claim 1 in solid form wherein at least 50% by weight of the total weight of the composition is Erythritol.

4. The use of the sweetening compositions of the above claims to sweeten a solid or liquid food.

## Patentansprüche

1. Süßungszusammensetzung, umfassend ein Gemisch aus Intensivsüßstoffen, bestehend aus:
- Cyclamat oder einem verzehrbaren Salz davon in einem prozentualen Anteil von 35 bis 65 %;
- Saccharin oder einem verzehrbaren Salz davon in einem prozentualen Anteil von 10 bis 35 %;
- Sucralose in einem prozentualen Anteil von 2,8 bis 55 %.
wobei die prozentualen Anteile nach Gewicht bezogen auf das Gesamtgewicht der Intensivsüßstoffe allein berechnet sind.

2. Süßungszusammensetzung nach Anspruch 1 in der Form einer wässrigen Lösung, die mindestens 75 % Gew.-% Wasser umfasst.

3. Süßungszusammensetzung nach Anspruch 1 in fester Form, wobei mindestens 50 Gew.-%, bezogen auf das Gesamtgewicht der Zusammensetzung, Erythritol sind.

4. Verwendung der Süßungszusammensetzungen nach den vorhergehenden Ansprüchen zum Süßen eines festen oder flüssigen Lebensmittels.

## Revendications

1. Composition d'édulcorant comprenant un mélange d'édulcorants intenses consistant en :
- du cyclamate ou un sel comestible de celui-ci en un pourcentage de 35 à 65 % ;
- de la saccharine ou un sel comestible de celle-ci en un pourcentage de 10 à 35 % ;
- du sucralose en un pourcentage de 2,8 à 55 %, dans laquelle les pourcentages sont calculés en poids du poids total des édulcorants intenses seuls.

2. Composition d'édulcorant selon la revendication 1 sous la forme d'une solution aqueuse comprenant au moins 75 % en poids d'eau.

3. Composition d'édulcorant selon la revendication 1 sous forme solide dans laquelle au moins 50 % en poids du poids total de la composition est de l'érythritol.

4. Utilisation des compositions d'édulcorant selon les revendications précédentes pour édulcorer un aliment solide ou liquide.
